(19) Europäisches Patentamt
European Patent Office
Office européen des brevets

(11) **EP 4 230 705 A1**

(12) **EUROPEAN PATENT APPLICATION**
published in accordance with Art. 153(4) EPC

(43) Date of publication:
**23.08.2023 Bulletin 2023/34**

(21) Application number: **21880019.1**

(22) Date of filing: **08.10.2021**

(51) International Patent Classification (IPC):
*C09D 109/00* (2006.01)    *C09D 133/00* (2006.01)
*H01M 4/13* (2010.01)    *C09D 7/43* (2018.01)
*C09D 7/61* (2018.01)    *H01M 50/414* (2021.01)
*H01M 50/42* (2021.01)

(52) Cooperative Patent Classification (CPC):
**C09D 7/43; C09D 7/61; C09D 109/00;**
**C09D 133/00; H01M 4/13; H01M 50/414;**
**H01M 50/42; Y02E 60/10**

(86) International application number:
**PCT/JP2021/037454**

(87) International publication number:
**WO 2022/080280 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.10.2020 JP 2020172811**

(71) Applicant: **Resonac Corporation**
**Tokyo 105-8518 (JP)**

(72) Inventors:
• **SUGAWARA Atsushi**
**Tokyo 105-8518 (JP)**
• **KONISHI Jun**
**Tokyo 105-8518 (JP)**

(74) Representative: **Strehl Schübel-Hopf & Partner**
**Maximilianstrasse 54**
**80538 München (DE)**

(54) **COATING COMPOSITION AND SUBSTRATE HAVING COATING FILM**

(57)    Provided is a composition capable of forming an easy-drying coating on an application surface in a paint, an ink, and an adhesive which mainly contain polymers, or a coating liquid for a positive electrode, a negative electrode, a separator, and the like of a lithium-ion secondary battery.

The coating composition containing a filler, a binder, a thickener, and a solvent, wherein

the binder is at least one selected from a diene rubber and a (meth)acrylate polymer; a viscosity of the coating composition is $1.0 \times 10^6$ Pa·s or less as measured at a shear rate of 0.01/s; and the following thixotropy index (TI) is $1.1 \times 10^6$ or more:

```
[thixotropy index (TI)] = [viscosity of the coating

composition as measured at a shear rate of 0.01/s]/[viscosity of the coating composition as measured at a shear rate of

10000/s].
```

**Description**

Technical Field

The present invention relates to a composition containing a filler, a binder, and a thickener, the composition capable of forming an easy-drying coating on an application surface in a paint, an ink, and an adhesive which mainly contain polymers, or a positive electrode, a negative electrode, a separator, and the like of a lithium-ion battery.

Background Art

Coating and printing technology with a composition has been widely used in industrial fields in general from the viewpoints of environment and safety, and efficiency. Such printing technology is desired to have high coating properties such that a minimum amount of the composition can be discharged and applied at high speed with high accuracy, and the resulting coated surface is smooth.
However, the physical properties of a composition having excellent coating properties are not understood.
For example, Patent Literature 1 discloses that a battery separator coated liquid excellent in dispersibility and ease of coating can be obtained by adjusting a suspension in which fibrous cellulose is diluted with ion exchanged water to a specific thixotropy index (TI).
Patent Literature 2 discloses a coated liquid for a metal-ion secondary battery separator capable of forming a uniform coating film having excellent coating properties by setting a viscosity ratio at a predetermined shear rate to a specific value or more.

Citation List

Patent Literature

Patent Literature 1: WO2018/070473
Patent Literature 2: JP5829557

Summary of Invention

Technical Problem

However, Patent Literature 1 does not disclose TI in a state of containing a composition other than fibrous cellulose and ion exchanged water. The high-speed coating properties is not described or suggested.
Patent Literature 2 discloses a coated liquid in which the content of a water-soluble component is 5% by mass or less and the solid content is extremely high, and which does not necessarily imply anything at all from the viewpoints of high-speed coating properties and surface smoothness.
Although many of the compositions have good coating properties, properties that contribute to high-speed coating properties and surface smoothness have not been identified.

Solution to Problem

As a result of intensive studies under such circumstances, the present inventors have found that by using a composition having a viscosity ratio in the specific range at a high shear rate and a low shear rate, a coating liquid has excellent coating properties, a coated film having excellent surface smoothness can be formed, and the composition can be sufficiently used for the above-described applications, and have thus completed the present invention.
That is, the configuration of the present invention is as follows.

[1] A coating composition comprising a filler, a binder, a thickener, and a solvent, wherein
the binder contains at least one selected from a diene rubber and a (meth)acrylate polymer,

a viscosity of the coating composition is $1.0 \times 10^6$ Pa·s or less as measured at a shear rate of 0.01/s, and the following thixotropy index (TI) is $1.1 \times 10^6$ or more: [thixotropy index (TI)] = [viscosity of the coating composition as measured at a shear rate of 0.01/s]/[viscosity of the coating composition as measured at a shear rate of 10000/s].

[2] The coating composition according to [1], wherein a ratio of the filler to the thickener is 10 to 100 in terms of mass ratio (filler/thickener).

[3] The coating composition according to [1] or [2], wherein the thickener is poly-N-vinylcarboxylic acid amide.

[4] The coating composition according to [1] to [3], wherein the thickener is poly-N-vinylacetamide.

[5] The coating composition according to [1] or [2], wherein the thickener is polyvinylpyrrolidone.

[6] The coating composition according to [1] to [5], comprising water as a solvent.

[7] The coating composition according to [1] to [6], wherein a value of the thixotropy index (TI) is $1.1 \times 10^8$ or less.

[8] The coating composition according to [1] to [7], wherein an aspect ratio of the filler is 1 or more and less than 2.

[9] A base material with a coating film, comprising a coating film formed from the coating composition according to [1] to [8] and a base material.

[10] A separator formed from the base material with a coating film according to [9].

[11] A secondary battery comprising the separator according to [10].

[12] A lithium-ion secondary battery comprising the separator according to [10].

[13] An electrode material including a coating film formed from the coating composition according to [1] to [8] on a surface of a base material.

Advantageous Effects of Invention

The coating composition of the present invention can provide a coated film having a smooth coated surface when the composition is applied at a high speed with high accuracy. When such a technique is employed for forming an electrode, a separator, or the like of a secondary battery, particularly, a lithium-ion secondary battery, the production efficiency of the secondary battery can be improved.

Description of Embodiments

Hereinafter, embodiments of the present invention will be described.

[Coating Composition]

The coating composition of the present embodiment includes a filler, a thickener, a binder, and a solvent.

Such a coating composition has a coating composition viscosity of $1.0 \times 10^6$ Pa·s or less as measured at a shear rate of 0.01/s.

The following thixotropy index (TI) is $1.1 \times 10^6$ or more, preferably $3.0 \times 10^6$ or more, and more preferably $1.0 \times 10^7$ or more. Further, the thixotropy index (TI) is preferably $1.1 \times 10^8$ or less, and preferably $5.0 \times 10^7$ or less. Such a predetermined thixotropy index (TI) can be adjusted by the composition.

$$[\text{Thixotropy index (TI)}] = [\text{viscosity of the coating composition as measured at a shear rate of } 0.01/\text{s}]/[\text{viscosity of the coating composition as measured at a shear rate of } 10000/\text{s}].$$

The thixotropy index (TI) of the present invention is a ratio of a viscosity at a high shear rate to a viscosity at a low shear rate, and with this ratio in the predetermined range, an extremely smooth coating film can be obtained without generating a streak or a flow on the surface even when coating is performed at high speed with high accuracy.

[Filler]

As the filler, one made of an inorganic substance is used. Specific examples of the filler preferably include alumina, boehmite, talc, kaolin, calcium carbonate, calcium phosphate, amorphous silica, crystalline glass filler, titanium dioxide, silica-alumina composite oxide particles, barium sulfate, calcium fluoride, lithium fluoride, zeolite, molybdenum sulfide, and mica. Among these, alumina and boehmite are more preferable.

The shape of the filler is not particularly limited and may be fibrous as well as spherical, polyhedral, plate-like, flaky, columnar, and tubular.

Desirably, the aspect ratio of the filler is preferably in the range of 1 or more and 15 or less, and more preferably 1 or more and less than 2. When the aspect ratio of the filler is 1 or more and 15 or less, it is preferable because the filler is easily mixed with other components in the coating composition.

Desirably, a 50% particle diameter in a cumulative particle size distribution on a volumetric basis, D50, of the filler is preferably in the range of 0.1 to 50 pm, and more preferably 0.5 to 10 $\mu$m.

[Thickener]

The thickener is made of an organic polymer. A binder described later is not included in the thickener. Examples of the preferred thickener include poly-N-vinylcarboxylic acid amide, poly-N-vinylpyrrolidone, sodium salts of carboxymethyl cellulose, polyacrylamide, polyvinyl alcohol, polysaccharides such as carrageenan, xanthan gum, guar gum, and pectin, cellulose-based polymers such as carboxymethyl cellulose, hydroxymethyl cellulose, hydroxyethyl cellulose, methylethylhydroxy cellulose, methyl cellulose, and hydroxypropyl cellulose, and ammonium salts and alkali metal salts of these cellulose-based polymers.

Among these, poly-N-vinylcarboxylic acid amide or poly-N-vinylpyrrolidone is preferable, poly-N-vinylcarboxylic acid amide is more preferable, and poly-N-vinylacetamide is still more preferable. Specific examples of the monomer constituting poly-N-vinylcarboxylic acid amide include N-vinylformamide, N-vinylacetamide, N-vinylpropionamide, N-vinylbenzamide, N-vinyl-N-methylformamide, N-vinyl-N-ethylformamide, N-vinyl-N-methylacetamide, and N-vinyl-N-ethylacetamide. Among these, N-vinylacetamide is particularly preferable.

These may be a homopolymerization product or a copolymerization product. In the case of copolymerization, it is possible to copolymerize salts of itaconic acid, maleic acid, crotonic acid, (meth)acrylic acid, and the like, but not particularly limited.

The content of the component derived from N-vinylacetamide in the poly-N-vinylcarboxylic acid amide is preferably 60 mol% or more.

The viscosity of the thickener is preferably 30 mPa·s or more and 30000 mPa·s or less in terms of apparent viscosity (without adjusting the concentration of the solution). Within this range, coating is easily performed, hence preferred.

[Binder]

The binder contains at least one selected from a diene rubber and a (meth)acrylate polymer, and more preferably consists only of at least one selected from a diene rubber and a (meth)acrylate polymer. Examples of the diene rubber include styrene-butadiene rubber, butyl rubber, butadiene rubber, isoprene rubber, acrylonitrile-butadiene rubber, ethylene propylene diene rubber, and modified products thereof. The (meth)acrylate polymer refers to a polymer containing at least one of acrylate and methacrylate. The (meth)acrylate polymer may be copolymerized and contains 50 mol% or more of acrylate and methacrylate.

Other monomers contained in the (meth)acrylate polymer are not particularly limited as long as they can be copolymerized with (meth)acrylate.

These may be added to the coating in the form of an emulsion latex in which they are dispersed in water.

Further, polyvinyl alcohol, poly(meth)acrylic acid, a higher alcohol ethylene oxide adduct, a polypropylene glycol ethylene oxide adduct, etc. can also be used as the binder, and in the case of poly(meth)acrylic acid, the salt is not particularly limited, but is preferably a metal-free ammonium salt, and for example, ammonium polyacrylate can be used.

Among these, a cross-linked acrylate emulsion is preferable. The acrylate emulsion may be either a homopolymer or a copolymer. It may be used as an emulsion or after solidification.

[Solvent]

The solvent is not particularly limited as long as it disperses or dissolves the above components without reacting with them, but a solvent having volatility is used in view of drying properties. Specifically, water or a polar solvent having compatibility with water is used, and a solvent containing water in an amount of 50% by mass or more is preferable, and water alone is more preferable. Water is particularly preferably ion exchanged water. Examples of solvents other than water include alcohols such as methanol, ethanol, and isopropanol.

[Dispersant]

The coating composition of the present invention may contain a dispersant, if necessary. The dispersant is not particularly limited as long as it can disperse the filler, but is preferably a fatty acid ester of dodecylbenzene sulfonic acid, sorbitol, or sorbitan. The salt is not particularly limited but is preferably a metal-free ammonium salt.

[Composition and Method of Preparing Coating Composition]

The mass ratio (filler/thickener) of the filler to the thickener in the coating composition is preferably 10 to 100, more preferably 20 to 80, and still more preferably 30 to 60. Within this ratio, it is preferable because coating is easy, drying properties are good, and sufficient strength of the coating layer can be obtained.

The mass of the filler in the coating composition is preferably in the range of 10 to 80% by mass, and more preferably 20 to 50% by mass. The mass of the filler is preferably in the range of 50 to 99% by mass, and more preferably 70 to 98% by mass, based on the solid content in the coating composition.

It is preferable that the solid content of the binder be contained preferably in the range of 0.1 to 20% by mass, and more preferably 1 to 5% by mass, based on the mass of the filler.

The mass of the binder (solid content) in the coating composition is preferably in the range of 0.1 to 20% by mass, and more preferably 1.0 to 5.0% by mass. The mass of the binder (solid content) is preferably in the range of 0.2 to 10% by mass, and more preferably 0.5 to 5.0% by mass, based on the solid content in the coating composition.

The mass of the thickener in the coating composition is preferably in the range of 0.01 to 20% by mass, and more preferably 1.0 to 5.0% by mass. The mass of the thickener is preferably in the range of 0.2 to 10% by mass, and more preferably 0.5 to 5% by mass, based on the solid content in the coating composition.

Usually, the amount of the filler is preferably 0.1 to 1000 parts by mass, and more preferably 1 to 200 parts by mass based on 100 parts by mass of the solvent such as water. Within this range, good fluidity of the coating composition can be obtained, whereby a coating composition having a viscosity of $1.0 \times 10^6$ Pa·s or less as measured at a shear rate of 0.01/s can be obtained.

When the dispersant is contained, the amount thereof in the coating composition is preferably in the range of 0.01 to 10% by mass, and more preferably 0.1 to 5% by mass. When contained in this range, the filler can be highly dispersed.

The method of mixing each component in the coating composition is not particularly limited, but in order to obtain a more uniform mixed state, it is preferable to dissolve or disperse the binder, the thickener, and the like in a solvent before adding and mixing the filler. Further, it is more preferable to successively add the filler to a solution in which the binder, the thickener, and the like are dissolved or dispersed while continuously stirring the solution to stir, mix and uniformize the solution. This makes it possible to achieve an ideal mixing form.

[Application]

The coating composition of the present embodiment can be used for various coating liquids such as a paint, an ink, an adhesive, and a positive electrode, a negative electrode, and a separator of a lithium-ion battery, depending on the type of the filler to be blended.

The coating composition may be used as a coating liquid as it is, or if necessary, as a coating liquid after appropriately being adjusted to the concentration and the viscosity with a solvent or the like.

For example, the coating composition is applied to the surface of a base material and dried to produce a coating film. A coating film composed of the coating composition may also be provided on the surface of the base material (referred to as a base material with a coating film) to form an electrode material.

The coating composition of the present invention contains the filler, the binder, the thickener, and the solvent, and the viscosity of the coating composition is $1.0 \times 10^6$ Pa·s or less as measured at a shear rate of 0.01/s.

Since the following thixotropy index (TI) is $1.1 \times 10^6$ or more, it is possible to obtain a coated film having a smooth coated surface even when the coating composition is applied at a high speed with high accuracy.

The method of applying the coating composition to the base material is not particularly limited, and continuous coating using a roll-to-roll pattern coating apparatus can also be employed, in addition to spray coating, roll coating, bar coating, gravure coating, die coating, knife coating, inkjet coating, brush coating, dip coating, and the like.

Further, the coating composition may contain known materials to be added to a paint in addition to the above and may contain, for example, a surface adjusting agent, a defoaming agent, a leveling agent, a pigment, and a dye.

As the base material, a film, a nonwoven fabric, a porous body, a plate-like body, or the like can be used without particular limitation.

Examples of materials constituting the base material include organic resin materials such as ethylene alone or copolymers with other α-olefins, homopolypropylene, copolymers of propylene and other olefins, polyethylene terephthalate, polyethylene naphthalate, polyamide ether ketone, polyimide, polyamide, polyphenylene sulfone, polyphenylene ether, polyethylene, polyether sulfone, polyether ether ketone, polybenzimidazole, polyetherimide, polyamide imide, poly(p-phenylene-2,6-benzobisoxazole), fluororesin, and epoxy resin; metal materials such as aluminum, copper, silver, and iron; and inorganic materials such as glass (silicon oxide), alumina, magnesia, aluminum nitride, aluminum carbide, silicon nitride, and barium titanate. The base material may be used alone or in combination of two or more kinds thereof. Among these, the base material is preferably polyolefin, more preferably at least one selected from polyethylene and polypropylene, and most preferably a three-layer laminate in which polypropylene, polyethylene, and polypropylene are laminated in this order. When a porous base material made of such a material is used, the porous base material can be used as a secondary battery separator or the like.

When the porous base material is a polyolefin film, the polyolefin film is not particularly limited to a film produced by a wet method or a dry method. When the porous base material is a laminate of three layers, all of the three layers are preferably produced by a dry method. A material having such a configuration is free from curling and has good heat resistance, mechanical strength, and the like.

The dry method is a dry process in which a solvent is not used in the production of the film, and examples thereof include melt molding and injection molding of a molten resin using a T-die. The outer layer and the inner layer may be produced by a dry method or a wet method, and the wet method is a method of forming a film using a resin to which an additive has been added and mixed, followed by solvent extraction of the additive to form voids.

The overall thickness of the base material is appropriately selected in terms of mechanical strength, performance, miniaturization, and the like according to the purpose, and is preferably 7.0 um or more, and the upper limit is preferably 50 um or less. With thickness in this range, high strength can be achieved.

In the case of the porous base material, the air permeance measured in accordance with JIS P 8117:2009 is preferably 80 sec/100 mL or more, and the upper limit is preferably 700 sec/100 mL or less. With the air permeance in this range, short circuits hardly occur, and mobility of ions is high.

The porosity of the porous base material is preferably 30% or more, and the upper limit is preferably 70% or less. With porosity in this range, mechanical strength is high, short circuits do not occur, and the mobility of ions can be high.

The maximum pore diameter of the porous base material is preferably 0.05 um or more, and the upper limit is preferably 2 um or less. Within this range, the mobility of ions is high while the resistance is low and large, when a separator is formed.

The thickness of the coating film is not particularly limited, and the coating film may have a thickness of 0.5 to 20 $\mu$m, but is not particularly limited.

The method of drying the coating film is not particularly limited, and examples thereof include spin drying, vacuum drying, hot air drying, and infrared drying. The drying time is not particularly limited either.

In the case of constituting the separator, for example, it can be formed by a method of applying the coating composition to the surface of the base material.

In the case of constituting the electrode, a battery electrode can be formed by a method of mixing the coating composition with a positive electrode active material or a negative electrode active material and coating the mixture on the surface of the base material or the current collector, or by coating a mixture of the coating composition with the positive electrode active material or the negative electrode active material on a respective electrode foil, or by forming the coating composition into a thin film and bonding the thin film into the surface of the current collector of the positive electrode and/or the negative electrode, wherein the coating composition may be contained in both electrodes.

The members constituting a lithium-ion secondary battery can be broadly divided into an anode, a cathode, a separator, and an electrolytic solution. Each of the anode and the cathode contains an active material that performs an oxidation/reduction reaction to send and receive electrons. The anode and the cathode can be used in the form of an electrode group having a laminated structure in which the electrodes are laminated with battery separators interposed therebetween, or an electrode group having a wound structure in which the electrodes are further wound.

The positive electrode is not particularly limited as long as it is a positive electrode used in a conventionally known lithium-ion secondary battery. The positive electrode contains an active material capable of occluding and releasing $Li^+$ ions.

The negative electrode is not particularly limited as long as it is a negative electrode used in a conventionally known lithium-ion secondary battery. The negative electrode contains an active material capable of occluding and releasing $Li^+$ ions.

The positive and negative electrodes can be used in the form of an electrode group having a laminated structure in which the electrodes are laminated with separators interposed therebetween, or an electrode group having a wound structure in which the electrodes are further wound. A solution in which a lithium salt is dissolved in an organic solvent is used as the electrolytic solution. The lithium salt is not particularly limited as long as it is dissociated in the solvent to form $Li^+$ ions and does not cause a side reaction such as decomposition in a voltage range in which the battery is used. The organic solvent is not particularly limited as long as it dissolves lithium salts and does not cause a side reaction such as decomposition in a voltage range in which the battery is used.

Each member produced using the coating composition of the present embodiment is appropriately used as each member of the battery.

Lithium-ion batteries are used in various conventionally known applications, in addition to power source applications for mobile devices such as mobile phones and notebook personal computers, and for various other devices such as electric vehicles, hybrid vehicles, electric motorcycles, power-assisted bicycles, electric tools, and shavers.

Examples

Hereinafter, the present invention will be described with reference to Examples, but the present invention is not limited to these Examples at all.

[Examples 1 to 12, Comparative Examples 1 to 3]

In a 200 ml resin container, the specified amounts of ion exchanged water, a surfactant, a dispersant, a binder, a thickener, and an inorganic filler shown in Table 1 are weighed in this order, and fed into a rotation/revolution kneader (ARE-250 manufactured by THINKY CORPORATION). The mixture was tightly sealed and mixed under the conditions of 60 seconds of mixing and 60 seconds of defoaming to obtain a uniform coating composition.

A polypropylene sheet (thickness of 1 mm) was fixed on a coating table of a coating machine, and 3.5 g of the obtained coating composition was applied over a width of 15 cm and a length of 30 cm at a rate of 200 mm/sec by an automatic coating machine (Pi-1210, manufactured by TESTER SANGYO CO., LTD.) using a bar coater (manufactured by Yoshimitsu Seiki K.K., width: 50 mm $\times$ thickness: 5 $\mu$m).

Thereafter, the polypropylene sheet on which the coating was formed was dried in a hot air dryer at a temperature of 40°C for 1 hour to obtain a coated sheet.

Components to be used in the composition are as follows. ·Filler
Alumina: AL160-SG-3 (manufactured by Showa Denko K.K.), $D_{50}$: 0.52 um, aspect ratio of 1.4
Flake boehmite: Cerasur (manufactured by KAWAI LIME INDUSTRY Co., Ltd.), aspect ratio: 20 to 40
Flake alumina: Cerasur $\alpha$ (manufactured by KAWAI LIME INDUSTRY Co., Ltd.), aspect ratio: 20 to 40

·Binder

Acrylate emulsion: Polysol(R) LB-350 (manufactured by Showa Denko K.K.)
SBR (styrene-butadiene rubber aqueous dispersion): BM400B (manufactured by Zeon Corporation)
Ammonium polyacrylate: Aron(R) A-30SL (manufactured by TOAGOSEI Co., Ltd.)

·Thickener

Poly-N-vinylacetamide PNVA(R)-1: GE191-043 (manufactured by Showa Denko K.K.), apparent viscosity of 5000 mPa·s, solid content of 4% by mass
Poly-N-vinylacetamide PNVA(R)-2: GE191-104 (manufactured by Showa Denko K.K.), apparent viscosity of 18000 mPa·s, solid content of 10% by mass
Poly-N-vinylacetamide PNVA(R)-3: GE191-107 (manufactured by Showa Denko K.K.), apparent viscosity of 50 mPa·s, solid content of 10% by mass
Carboxymethyl cellulose CMC-Na: MAC350HC (manufactured by Nippon Paper Industries Co., Ltd., 2% by mass, viscosity of 7800 mPa·s)
Polyvinylpyrrolidone: PVP K-90 (manufactured by Tokyo Chemical Industry Co., Ltd.)

·Dispersant
Sodium dodecylbenzenesulfonate aqueous dispersion: NEOPELEX G-65 (manufactured by Kao Corporation)

[Table 1]

| | | Ex. 1 | Ex. 2 | Ex. 3 | Ex. 4 | Ex. 5 |
|---|---|---|---|---|---|---|
| Filler | Alumina | 100 | 100 | 100 | 100 | 100 |
| | Flake boehmite | | | | | |
| | Flake alumina | | | | | |
| Solvent | water | 100 | 100 | 100 | 100 | 100 |
| Dispersant | Sodium dodecylbenzenesulfonate | | | | | |

(continued)

| | | Ex. 1 | Ex. 2 | Ex. 3 | Ex. 4 | Ex. 5 |
|---|---|---|---|---|---|---|
| Binder | Acrylate emulsion | 3 | 3 | 3 | 3 | 3 |
| | Ammonium polyacrylate | 1 | 1 | 1 | 1 | 1 |
| | SBR | | | | | |
| Thickener | PNVA-1 | 1.3 | | 1 | | 2 |
| | PNVA-2 | | | | | |
| | PVP | | 1.3 | | 1 | |
| | CMC-Na | | | | | |
| | | Ex. 6 | Ex. 7 | Ex. 8 | Ex. 9 | Ex. 10 |
| Filler | Alumina | 100 | | | | |
| | Flake boehmite | | | 100 | 100 | 100 |
| | Flake alumina | | 35 | | | |
| Solvent | water | 100 | 100 | 130 | 120 | 120 |
| Dispersant | Sodium dodecylbenzenesulfonate | | | | 1 | |
| Binder | Acrylate emulsion | 3 | 3 | 3 | | |
| | Ammonium polyacrylate | 1 | 1 | 1 | | 1 |
| | SBR | | | | 3 | 3 |
| Thickener | PNVA-1 | | 1 | 1 | 1 | |
| | PNVA-2 | | | | | 1 |
| | PVP | 2 | | | | |
| | CMC-Na | | | | | |
| | | Ex. 11 | Ex. 12 | Comp. Ex. 1 | Comp. Ex. 2 | Comp. Ex. 3 |
| Filler | Alumina | | | 100 | 100 | 100 |
| | Flake boehmite | 100 | 100 | | | |
| | Flake alumina | | | | | |
| Solvent | water | 120 | 120 | 100 | 100 | 100 |
| Dispersant | Sodium dodecylbenzenesulfonate | | | | | |
| Binder | Acrylate emulsion | | | 3 | 3 | 3 |
| | Ammonium polyacrylate | 1 | 1 | 1 | 1 | 1 |
| | SBR | 3 | 3 | | | |
| Thickener | PNVA-1 | | | | | |
| | PNVA-2 | 1.3 | 2 | | | |
| | PVP | | | | | |
| | CMC-Na | | | 1.3 | 1 | 2 |
| (Parts by mass of solid content: Water is expressed as parts by mass) | | | | | | |

The obtained compositions and coated sheets were evaluated in the following manner.

<Rotational Viscosity>

Using a DV2T viscometer Spindle SC4-28 and Small Sample Adapter with a Water Jacket, manufactured by Brookfield, 20 g of the coating composition was placed in a sample holder to measure the rotational viscosity at rotational speeds of 0.3 rpm and 100 rpm.

<Solution Viscosity>

The coating composition was evaluated using a B-type viscometer (DV2T viscometer Spindle SC4-28 and Small Sample Adapter with Water Jacket, manufactured by Brookfield) at 23°C, 50 rpm.
In blank spaces of Examples 8 to 12, no data measurements were carried out.

<Shear Viscosity, TI>

The thixotropy index (TI) is calculated from the following expression.
TI = viscosity of coating composition at a shear rate of 0.01/s (Pa·s)/viscosity of coating composition at a shear rate of 10000/s (Pa·s)
The shear viscosity was measured using a rotational viscometer manufactured by Anton Parr GmbH. Specifically, the viscosity of the coating composition at 23°C was measured while increasing the shear rate from 0.1 sec$^{-1}$ to 10000 sec$^{-1}$ over 400 seconds and subsequently decreasing the rate from 10000 sec$^{-1}$ to 0.1 sec$^{-1}$ over 400 seconds. The value measured while decreasing the shear rate was defined as the viscosity at each shear rate.

<Viscosity of Carboxymethyl Cellulose>

The carboxymethyl cellulose was adjusted with water so as to have a solids content of 2% by mass and evaluated using a DVE-type viscometer Spindle H04 manufactured by Brookfield at 23°C, 50 rpm.

<Coating Film Thickness>

Using a constant pressured thickness measuring instrument PF-11J, manufactured by TECLOCK Co., Ltd., a total of three points, i.e., the center of the coated and dried film and two points 10 cm above and below the center were measured and averaged.

<Appearance of Coated Surface>

The surface appearance of the coated sheet was evaluated according to the following criteria.

○: No void was observed on the coated surface
△: 10 or less voids were observed on the coated surface
X: More than 10 voids were observed on the coated surface

<Surface Roughness>

The arithmetic average roughness (Ra) of the coated sheet (15 cm × 30 cm) was measured and averaged at a total of three points, i.e., the center and two points 10 cm above and below the center, using a Surtronic Duo surface roughness tester (manufactured by Taylor Hobson Ltd.).

<Peeling Evaluation>

The coated surface of the coated sheet was subjected to a scotch tape peeling test using a cellulose tape with a width of 15 mm, manufactured by Nichiban Co., Ltd., and the adhesion between the coating and the polypropylene sheet was evaluated in the following three grades.

O: No coated portion peeled off.
△: Coated portion slightly peeled off, but still practical.
X: Coated portion peeled off, which was not acceptable for practical use.

<Evaluation of Heat Resistance>

The site of the coating having a constant thickness (6 to 7 $\mu$m) was peeled off from the coated sheet and collected into a rectangle (5 cm $\times$ 4 cm), then the lengths of four sides of the rectangle were measured. Next, the test piece was placed on a metal tray at a distance so as not to interfere with each other.
The metal tray was put in an air oven having an internal temperature of 150°C and allowed to stand for 15 minutes, and then taken out to measure the dimensions of the four sides. The test piece for which measurement had been completed was again put in an air oven adjusted to 200°C and allowed to stand for 15 minutes, and then taken out to measure the dimensions of the four sides.
Evaluations were performed with the following items.

O: Shrinkage rate is 20% or less on all sides at 150°C and 200°C.
$\Delta$: Shrinkage rate is more than 20% and 30% or less on any side in the 150°C and 200°C tests, and 30% or less on all sides.
X: Shrinkage rate is more than 30% on any side in the 150°C and 200°C tests.

<Aspect Ratio>

In accordance with JIS R1670-2006, the major axes and the minor axes of 100 particles were each measured with a microscope image and averaged to determine a ratio by dividing the average major axis by the average minor axis.

<$D_{50}$>

The volume distribution-based median diameter (hereinafter, also referred to as $D_{50}$) and volume distribution-based volume average diameter were measured with a laser diffraction/scattering particle size distribution analyzer (Partica mini LA-350, manufactured by HORIBA, Ltd.).

[Table 2]

| | | | Ex. 1 | Ex. 2 | Ex. 3 | Ex. 4 | Ex. 5 |
|---|---|---|---|---|---|---|---|
| Rotational viscosity | (Low) shear stress (Pa)η0.3 | 0.3 rpm | 1.40 | 0.28 | 0.84 | 0.28 | 1.40 |
| | (High) shear stress (Pa) η100 | 100 rpm | 50.40 | 4.20 | 17.64 | 2.80 | 62.72 |
| | η100/η0.3 | | 36.00 | 15.00 | 21.00 | 10.00 | 44.80 |
| Solution viscosity (mPa·s) | | | 2220 | 200 | 780 | 140 | 2860 |
| Thixotropy | High shear viscosity (Pa·s) | Shear rate 10000/s | 0.083 | 0.017 | 0.065 | 0.016 | 0.059 |
| | Low shear viscosity (Pa·s) | Shear rate 0.01/s | 129,000 | 56,300 | 111,000 | 57,000 | 74,400 |
| | TI | Low shear viscosity /High shear viscosity | 1,554,217 | 3,351,190 | 1,707,692 | 3,562,500 | 1,261,017 |
| Appearance of coated surface | | 3-grade evaluation | O | O | O | O | O |
| Surface roughness | Surface roughness tester | Ra (arithmetic average) μm | 1.23 | 1.87 | 0.58 | 0.48 | 1.21 |
| | | Coating film thickness (representative value) μm | 9.5 | 9.5 | 8.5 | 15.5 | 9.5 |
| Surface roughness ratio | | Ra (μm)/coating film thickness (μm) | 0.129 | 0.197 | 0.068 | 0.031 | 0.127 |
| Peeling | | 3-grade evaluation | O | Δ | Δ | Δ | O |
| Heat resistance | | 3-grade evaluation | O | Δ | O | Δ | O |

| | | | Ex. 6 | Ex. 7 | Ex. 8 | Ex. 9 | Ex. 10 |
|---|---|---|---|---|---|---|---|
| Rotational viscosity | (Low) shear stress (Pa)η0.3 | 0.3 rpm | 0.28 | 0.84 | Unfillable | 1.12 | 1.40 |
| | (High) shear stress (Pa) η100 | 100 rpm | 4.48 | 113.70 | Unfillable | 4.48 | 6.16 |
| | η100/η0.3 | | 16.00 | 135.36 | | 4.00 | 4.40 |
| Solution viscosity (mPa·s) | | | 220 | 1280 | | | |
| Thixotropy | High shear viscosity (Pa·s) | Shear rate 10000/s | 0.024 | 0.708 | 0.398 | 0.281 | 0.209 |
| | Low shear viscosity (Pa·s) TI | Shear rate 0.01/s | 81,000 | 821,000 | 534,000 | 325,000 | 286,000 |
| | | Low shear viscosity /High shear viscosity | 3,375,000 | 1,159,766 | 1,340,342 | 1,156,975 | 1,369,268 |
| Appearance of coated surface | | 3-grade evaluation | O | O | O | O | O |

(continued)

| | | | Ex. 6 | Ex. 7 | Ex. 8 | Ex. 9 | Ex. 10 |
|---|---|---|---|---|---|---|---|
| Surface roughness | Surface roughness tester | Ra (arithmetic average) μm | 1.68 | 0.86 | 0.59 | 0.95 | 0.86 |
| | | Coating film thickness (representative value) μm | 10.5 | 6.2 | 5.2 | 7.9 | 5.8 |
| Surface roughness ratio | | Ra (μm)/coating film thickness (μm) | 0.160 | 0.139 | 0.113 | 0.120 | 0.148 |
| Peeling | | 3-grade evaluation | Δ | O | O | O | O |
| Heat resistance | | 3-grade evaluation | Δ | O | O | O | O |

| | | | Ex. 11 | Ex. 12 | Comp. Ex. 1 | Comp. Ex. 2 | Comp. Ex. 3 |
|---|---|---|---|---|---|---|---|
| Rotational viscosity | (Low) shear stress (Pa)$\eta 0.3$ | 0.3 rpm | 1.40 | 1.68 | 8.40 | 2.80 | 11.76 |
| | (High) shear stress (Pa) $\eta 100$ | 100 rpm | 5.88 | 7.28 | 164.10 | 38.92 | 206.40 |
| | $\eta 100/\eta 0.3$ | | 4.20 | 4.33 | 19.54 | 13.90 | 17.55 |
| Solution viscosity (mPa·s) | | | | | 8800 | 1900 | 1230 |
| Thixotropy | High shear viscosity (Pa·s) | Shear rate 10000/s | 0.002 | 0.009 | 0.085 | 0.051 | 0.111 |
| | Low shear viscosity (Pa·s) TI | Shear rate 0.01/s | 175,000 | 67,400 | 23,100 | 54,600 | 50,900 |
| | | Low shear viscosity /High shear viscosity | 91,945,011 | 7,568,839 | 272,406 | 1,070,588 | 458,559 |
| Appearance of coated surface | | 3-grade evaluation | O | O | X | Δ | Δ |
| Surface roughness | Surface roughness tester | Ra (arithmetic average) μm | 0.38 | 0.47 | 5.61 | 2.17 | 1.78 |
| | | Coating film thickness (representative value) μm | 4.4 | 4.1 | 17.5 | 17.5 | 11.5 |
| Surface roughness ratio | | Ra (μm)/coating film thickness (μm) | 0.086 | 0.115 | 0.321 | 0.124 | 0.155 |
| Peeling | | 3-grade evaluation | O | O | X | X | X |
| Heat resistance | | 3-grade evaluation | O | O | X | X | X |

Table 2 shows that in Examples in which TI was in a specific range, a coating film was formed having high surface smoothness without any disturbance on the coated surface, as well as excellent peeling properties and heat resistance.

**Claims**

1.  A coating composition comprising a filler, a binder, a thickener, and a solvent, wherein
    the binder comprises at least one selected from a diene rubber and a (meth)acrylate polymer,

    a viscosity of the coating composition is $1.0 \times 10^6$ Pa·s or less as measured at a shear rate of 0.01/s, and the following thixotropy index (TI) is $1.1 \times 10^6$ or more:

    ```
    [thixotropy index (TI)] = [viscosity of the coating

    composition as measured at a shear rate of 0.01/s]/[viscosity of the coating composition as measured at a shear rate of 10000/s].
    ```

2.  The coating composition according to claim 1, wherein a ratio of the filler to the thickener is 10 to 100 in terms of mass ratio, filler/thickener.

3.  The coating composition according to claim 1 or 2, wherein the thickener is poly-N-vinylcarboxylic acid amide.

4.  The coating composition according to any one of claims 1 to 3, wherein the thickener is poly-N-vinylacetamide.

5.  The coating composition according to claim 1 or 2, wherein the thickener is polyvinylpyrrolidone.

6.  The coating composition according to any one of claims 1 to 5, comprising water as a solvent.

7.  The coating composition according to any one of claims 1 to 6, wherein a value of the thixotropy index (TI) is $1.1 \times 10^8$ or less.

8.  The coating composition according to any one of claims 1 to 7, wherein an aspect ratio of the filler is 1 or more and less than 2.

9.  A base material with a coating film, comprising a coating film formed from the coating composition according to any one of claims 1 to 8 and a base material.

10. A separator formed from the base material with a coating film according to claim 9.

11. A secondary battery comprising the separator according to claim 10.

12. A lithium-ion secondary battery comprising the separator according to claim 10.

13. An electrode material comprising a coating film formed from the coating composition according to any one of claims 1 to 8 on a surface of a base material.

## INTERNATIONAL SEARCH REPORT

| | International application No. |
|---|---|
| | **PCT/JP2021/037454** |

**A. CLASSIFICATION OF SUBJECT MATTER**

*C09D 109/00*(2006.01)i; *C09D 133/00*(2006.01)i; *H01M 4/13*(2010.01)i; *C09D 7/43*(2018.01)i; *C09D 7/61*(2018.01)i; *H01M 50/414*(2021.01)i; *H01M 50/42*(2021.01)i
FI: C09D109/00; H01M50/414; H01M4/13; H01M50/42; C09D7/61; C09D133/00; C09D7/43

According to International Patent Classification (IPC) or to both national classification and IPC

**B. FIELDS SEARCHED**

Minimum documentation searched (classification system followed by classification symbols)

C09D109/00; C09D133/00; H01M4/13; C09D7/43; C09D7/61; H01M50/414; H01M50/42

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-145123 A (UBE MAXELL KYOTO LTD) 10 September 2020 (2020-09-10) examples | 1-12 |
| A | examples | 13 |
| Y | JP 2018-166062 A (ASAHI KASEI CORP) 25 October 2018 (2018-10-25) example 9 | 1-2, 5-12 |
| A | example 9 | 3-4, 13 |
| Y | JP 2019-160707 A (MAXELL HOLDINGS LTD) 19 September 2019 (2019-09-19) claims, examples | 1-4, 6-7, 9-13 |
| A | claims, examples | 5, 8 |
| Y | WO 2010/104127 A1 (HITACHI MAXELL, LTD) 16 September 2010 (2010-09-16) examples | 1-4, 6-7, 9-12 |
| A | examples | 5, 8, 13 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| | International application No. |
|---|---|
| | **PCT/JP2021/037454** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2003-151554 A (HITACHI MAXELL LTD) 23 May 2003 (2003-05-23) paragraphs [0045] | 1-4, 6-9, 13 |
| A | paragraphs [0045] | 5, 10-12 |
| Y | JP 2017-059297 A (HITACHI MAXELL) 23 March 2017 (2017-03-23) examples | 1-2, 5-9, 13 |
| A | examples | 3-4, 10-12 |
| Y | JP 2018-181833 A (SUMITOMO CHEMICAL CO) 15 November 2018 (2018-11-15) paragraph [0023] | 1-13 |
| Y | JP 2013-196780 A (MITSUBISHI PAPER MILLS LTD) 30 September 2013 (2013-09-30) paragraph [0014] | 1-13 |
| Y | WO 2018/070473 A1 (OJI HOLDINGS CORP) 19 April 2018 (2018-04-19) paragraph [0018] | 1-13 |

Form PCT/ISA/210 (second sheet) (January 2015)

**INTERNATIONAL SEARCH REPORT**
Information on patent family members

International application No.

**PCT/JP2021/037454**

| Patent document cited in search report | | | Publication date (day/month/year) | Patent family member(s) | | | Publication date (day/month/year) |
|---|---|---|---|---|---|---|---|
| JP | 2020-145123 | A | 10 September 2020 | (Family: none) | | | |
| JP | 2018-166062 | A | 25 October 2018 | (Family: none) | | | |
| JP | 2019-160707 | A | 19 September 2019 | (Family: none) | | | |
| WO | 2010/104127 | A1 | 16 September 2010 | US | 2011/0143183 | A1 | |
| | | | | examples | | | |
| | | | | KR | 10-2011-0031998 | A | |
| | | | | CN | 102124591 | A | |
| | | | | JP | 2013-101954 | A | |
| JP | 2003-151554 | A | 23 May 2003 | (Family: none) | | | |
| JP | 2017-059297 | A | 23 March 2017 | (Family: none) | | | |
| JP | 2018-181833 | A | 15 November 2018 | US | 2018/0301679 | A1 | |
| | | | | paragraph [0028] | | | |
| | | | | KR | 10-2018-0116078 | A | |
| JP | 2013-196780 | A | 30 September 2013 | (Family: none) | | | |
| WO | 2018/070473 | A1 | 19 April 2018 | (Family: none) | | | |

Form PCT/ISA/210 (patent family annex) (January 2015)

**REFERENCES CITED IN THE DESCRIPTION**

**Patent documents cited in the description**

- WO 2018070473 A

- JP 5829557 B